(19) **Europäisches Patentamt**
**European Patent Office**
**Office européen des brevets**

(11) Veröffentlichungsnummer: **0 087 717**
**B2**

(12) # NEUE EUROPÄISCHE PATENTSCHRIFT

(45) Veröffentlichungstag der neuen Patentschrift:
**10.10.90**

(51) Int. Cl.⁵: **A 23 L 1/223,** A 23 L 1/22

(21) Anmeldenummer: **83101648.0**

(22) Anmeldetag: **21.02.83**

(54) Rieselfähiges Würzpflanzentrockenprodukt.

(30) Priorität: **20.02.82 DE 3206189**

(43) Veröffentlichungstag der Anmeldung:
**07.09.83 Patentblatt 83/36**

(45) Bekanntmachung des Hinweises auf die
Patenterteilung:
**22.01.86 Patenblatt 86/04**

(45) Bekanntmachung des Hinweises auf die
Entscheidung über den Einspruch:
**10.10.90 Patentblatt 90/41**

(84) Benannte Vertragsstaaten:
**AT BE CH DE FR IT LI NL SE**

(56) Entgegenhaltungen:
**CH-A- 577 271      DE-B-1 053 911
DE-A-2 535 234    FR-A- 786 273
DE-A-2 900 098    FR-A- 816 017
DE-A-2 905 058    US-A-3 594 194**

Die Akte enthält technische Angaben, die nach
dem Eingang der Anmeldung eingereicht
wurden und die nicht in dieser Patentschrift
enthalten sind.

(73) Patentinhaber: **CPC INTERNATIONAL INC.
International Plaza P.O. Box 8000
Englewood Cliffs New Jersey 07632 (US)**

(72) Erfinder: **Kellermann, Richard
Schillerstrasse 6
D-6926 Kirchardt (DE)**
Erfinder: **Bezner, Klaus
Haldenstrasse 15
D-7101 Untergruppenbach/Unterheinriet (DE)**
Erfinder: **Bohrmann, Hans, Dr.
Moerickeweg 8
D-7129 Talheim (DE)**
Erfinder: **Biller, Florian, Dr.
Haldenstrasse 1
D-7101 Untergruppenbach/Unterheinriet (DE)**

(74) Vertreter: **Lederer, Franz, Dr. et al
Van der Werth, Lederer & Riederer
Patentanwälte Lucile-Grahn-Strasse 22
D-8000 München 80 (DE)**

(56) Entgegenhaltungen:
**Patent Abstracts of Japan, Band 5, Nr. 140, 4.
September 1981
Enzyklopädie Naturwissenschaft und Technik,
Zweiburgen Verlag Weinheim, 1980, S.1671,
1673
Lebensmittel-Lexikon, VEB Verlag Leipzig,
S.339, 478 u. 632
JP-A 72662/81**

EP 0 087 717 B2

**Beschreibung**

Die Erfindung betrifft ein Würzpflanzentrockenprodukt nach dem Oberbegriff des Hauptanspruchs.

Einen der entscheidendsten Faktoren für die Qualität von Speisen und den Rang einer Küche stellt seit jeher zweifellos die Würzung dar, bei der, abgesehen von Salz, Zucker und Essig, Kräuter und Gemüse mit ausgeprägtem würzigem Aroma (Würzpflanzen) stets eine überragende Rolle gespielt haben, wobei bei vielen Würzpflanzen eine "Dekorationsfunktion" hinzukommt.

Die Tatsache, daß die meisten Würzpflanzen von Haus aus nur über eine recht geringe Haltbarkeit verfügen und erntefrisch — klimabedingt — an sich nur regional und/oder saisonal beschränkt verfügbar sind, hat schon früh zu Versuchen geführt, diesem Mangel abzuhelfen.

Dabei lassen sich grob folgende Lösungswege unterscheiden:

1) Verbesserung der Versorgung mit erntefrischen Würzpflanzen durch kilmaunabhängigen Anbau unter Glas und/oder rascheren Transport.

2) "Nasse Konservierung" durch "Einmieten", "Einsalzen", "Einlegen", "Kandieren" oder "Einfrieren".

3) Haltbarmachen durch Überführen in "trockene Produkte", nämlich "Trockenwürzpflanzen" und "Essenzen".

Bezüglich der beiden erstgenannten Lösungswege wurden zwar teilweise beachtliche Erfolge erzielt, die jedoch im gegebenen Zusammenhang deswegen nicht näher erörtert zu werden brauchen, weil die danach verfügbaren Würzpflanzenprodukte definitionsgemäß einen mehr oder weniger hohen Wassergehalt aufweisen und somit für Lebensmitteltrockenprodukte, wie Trockensuppen und -soßen, die einen erheblichen Teil der industriell hergestellten Lebensmitel darstellen, a priori nicht in Betracht kommen.

Was den dritten Lösungsweg betrifft, so ist festzustellen, daß sich — trotz der ungeheuren Entwicklung der Technik allgemein und auch der Lebensmitteltechnologie in den letzten Jahrzehnten — an der seit Jahrhunderten bestehenden Situation, die sich wie folgt darstellen läßt, praktisch nichts geändert hat:

Abgesehen von einigen pflanzlichen Gewürzen, wie Gewürznelken, Muskat, Safran oder Pteffer, die jedenfalls in Mitteleuropa praktisch nur in getrockneter Form Verwendung finden, gibt es ganz wenige Würzkräuter, z.B. Lorbeerblätter, die durch Trocknung sogar gewinnen, einige Würzkräuter, wie Bohnenkraut, die durch die traditionelle Trocknung — jedenfalls hinsichtlich des Aromas — keinen oder allenfalls einen geringfügigen Qualitätsverlust erleiden, und eine ganze Reihe von Würzkräutern, wie Schnittlauch, Dill, Basilikum, Liebstöckel und insbesondere Petersilie, die bei der Trocknung nach bekannten Methoden ein Produkt ergeben, das hinsichtlich Aroma und Farbe streng genommen nur als aromatisches "Heu" bezeichnet werden kann und seine Verwendung in Trockenlebensmitteln und der privaten Küche eigentlich nur der Tatsache verdankt, daß diese Kräuter aus der guten europäischen Küche nicht wegzudenken sind. Diesbezüglich stellt selbst die aufwendige Gefriertrocknung keine entscheidende Verbesserung dar.

Hinzu kommt, daß die nach bekannten Verfahren erhältlichen Würzpflanzentrockenprodukte ausnahmslos unbefriedigende mechanische Eigenschaften aufweisen, d. h. sie zerbröseln unter den bei der Herstellung, Abpackung und Handhabung von Trockenlebensmitteln unvermeidlichen Reibkräften zumindest teilweise zu einem unansehnlichen Pulver.

Ein weiterer Ausweg, der jedoch ebenfalls nicht voll befriedigen konnte, war die Verwendung von Essenzen, die, abgesehen davon, daß sie naturgemäß dem Auge nichts bieten, erfahrungsgemäß in der Regel ein gegenüber dem Original mehr oder weniger ausgeprägt verändertes, meist einseitigeres Aromaspektrum aufweisen.

Der Erfindung lag daher die Aufgabe zugrunde Würzpflanzentrockenprodukte der eingangs bezeichneten Art zur Verfügung zu stellen, die die Nachteile des Standes der Technik vermeiden und insbesondere rieselfähig, abriebs- und lagerbeständig, sowie in wäßrigen Flüssigkeiten glatt zu zerkleinerten Würzpflanzen rekonstituierbar sind, die bezüglich Aroma und Farbe frischen zerkleinerten Würzpflanzen zumindest weitgehend gleichkommen.

Diese Aufgabe wird erfindungsgemäß durch ein rieselfähiges Pflanzenprodukt aus getrockneten, zerkleinerten Würzkräutern und/oder Gemüsen (Würzpflanzen) gelöst, welches dadurch gekennzeichnet ist, daß es

a) bezogen auf Gesamttrockensubstanz, 10—99 Gew.-% eines eßbaren, wasserlöslichen Trägers bestehend aus

i) Natrium- und/oder Kaliumchlorid (Elektrolyt) und

ii) gegebenenfalls hydrierten Kohlenhydrat enthält und mit Mononatriumglutamat auf pH 4,5 bis 7,5, vorzugsweise 5,0 bis 7,0 und insbesondere 5,4 bis 6,7 abgepuffert ist, wobei das Produkt

b) durch Trocknung erntefrischer und/oder erntefrisch tiefgefrorener, gegebenenfalls zerkleinerter Würzpflanzen aus der Gruppe bestehend aus Basilikum, Petersilie, Liebstöckel, Dill, Schnittlauch, Kerbel, Majoran, Thymian, Sellerie, Paprika, Fenchel und Lauch in Gegenwart des damit gleichmäßig vermischten Trägers bei 70°C im Gut nicht übersteigenden Temperaturen erhalten worden ist,

c) mit der Maßgabe, daß die Würzpflanzen vor bzw. zu Beginn der Trocknung, und zwar spätestens 12 Stunden nach der Ernte und höchstens 4 Stunden nach dem Zerkleinern, im Falle von erntefrischen, bzw. spätestens unmittelbar nach dem Auftauen, im Falle von erntefrisch tiefgefrorenen Würzpflanzen, durch

$c_1$) Versetzen mit mindestens einem Elektrolyten und/oder

$c_2$) möglichst rasches Erhitzen auf 50 bis 150°C für 5 Sekunden bis 1 Stunde, sowie gegebenenfalls sofortiges rasches Abkühlen bis auf 70°C oder darunter stabilisiert worden sind.

In der FR—A—816 017 wird ein Verfahren zum Zerreiben und Trocknen von Arzneimittelpflanzen unter Zusatz bestimmter Kohlenhydrate beschrieben, welches den Zweck verfolgt, die pharmazeutisch relevanten Wirkstoffe zu erhalten.

Die DE—A—2 905 058 bezieht sich auf die Konservierung von Gewürzkräutern in frischem Zustand ohne Trocknung.

Die US—A—3 594 194 beschreibt ein Verfahren zur Behandlung von Basilikum, wobei die Pflanzenteile nach einer anfänglichen Heißwasser- oder Heißdampfbehandlung und Kaltwasserabschreckung geschnitten und gekühlt oder gefriergetrocknet werden.

Die JP—A—72 662/81 betrifft ein Verfahren zur Herstellung von granulierten Gewürzen, wobei das natürliche Material gefroren, zerstoßen, mit einem Wasseradsorptionsmittel vermischt, erwärmt und schließlich getrocknet wird.

In der DE—B—1 053 911 wird ein Verfahren zur Stabilisierung von Gewürzen durch Versetzung von Pflanzenteilen in frischem Zustand mit Natriumacetat und Essigsäure beschrieben, worauf das Gemisch vorsichtigt getrocknet wird. Erfindungsgemäß ist der Einsatz von Essigsäure, einem wesentlichen Bestandteil der in dem bekannten Falle eingesetzten Kombination aus Natriumacetat und Essigsäure, nicht vorgesehen, ferner werden erfindungsgemäß wesentlich höhere Mengen an dem definierten wasserlöslichen Träger eingesetzt, wobei es ferner erfindungsgemäß wesentlich ist, daß die vorstehend beschriebenen Maßnahmen c eingehalten werden, auf deren Bedeutung in der genannten DE—B 1 053 911 nicht eingeganen wird.

Die Vorteile der Erfindung kommen insbesondere bei bisher notorisch schlecht trockenbaren Würzpflanzen zum Tragen, also insbesondere bei Lauch, Fenchel, Paprika, Sellerieblättern und Majoran, sowie vor allem Thymian, Kerbel, Kresse, Schnittlauch, Dill, Liebstöckel, Basilikum, Estragon und Petersilie. Wenn eine Elektrolyt, vorzugsweise Kalium- und insbesondere Natriumchlorid, als Träger verwendet und die Trocknung so geführt wird, daß die im Gemisch vorhandene und/oder sich bildende wäßrige Flüssigkeit ständig weitgehend mit dem Elektrolyt gesättigt ist und somit einen deutlich verminderten AW-Wert von höchstens 0,9, vorzugsweise nicht mehr als 0,85 und insbesondere weniger als 0,8 aufweist, so genügt es, den Träger innerhalb der im Hauptanspruch angegebenen Zeiten mit den Würzpflanzen möglichst gleichmäßig zu vermischen und das Gemisch danach auf beliebige, an sich bekannte Weise zu trocknen.

Diesbezüglich sei hingewiesen, daß es nur darauf ankommt, den Elektrolyt rechtzeitig zuzusetzen, während die nachfolgende Trocknung keineswegs innerhalb der genannten Höchstzeiten begonnen oder gar beendet sein muß. Es versteht sich jedoch von selbst, daß mit der Durchführung der Trocknung nicht unnötig zugewartet sollte; in der Regel sollte die Trocknung nach längstens 24 Stunden abgeschlossen sein.

Bei dieser Ausführungsform der Erfindung liegt der Elektrolytzusatz insbesondere dann, wenn allein dadurch eine brauchbare Stabilisierung erzielt werden soll, relativ hoch und entspricht, bezogen auf Pflanzentrockensubstanz, etwa 25 bis 300 Gew.-%; er kann daher, je nachdem wofür bzw. wie das Würzpflanzentrockenprodukt letztlich eingesetzt wird, fallweise störend sein. Um den Salzgehalt des Produkts in diesem Fall in Grenzen zu halten, kann man den Elektrolyt teilweise durch gegebenenfalls hydrierte Zuckerarten ersetzen. Solche Salz/Zuckergemische weisen zudem bei der anmeldungsgemäß wegen ihrer Einfachheit bevorzugten Vakuumtrocknung ein besonders gunstiges Verhalten auf und führen nach den bisherigen Erfahrungen auch hinsichtlich des Aromaerhalts bei der Trocknung zu besonders günstigen Ergebnissen. Wahlweise kann der Salzgehalt erfindungsgemäßer Würzpflanzentrockenprodukte auch dadurch gering gehalten werden, daß man als Träger statt eines Elektrolyten teilweise Protein(e) und/oder — gegebenenfalls hydrierte — Oligo und/oder Polysaccharide, insbesondere lösliche, gegebenenfalls hydrierte Maltopolysaccharide, vorzugsweise Maltodextrin, Quellstärke und/oder sogenannte lösliche oder dünnkochende Stärke verwendet. Dabei ist, wie bereits erwähnt, darauf zu achten, daß bei geringem Elektrolytzusatz zur Aroma- und Farbstabilisierung eine thermische Behandlung gemäß Merkmal $ii_2$) des Hauptansprüchs vorgenommen werden muß.

Um dabei eine möglichst rasche und gleichmäßige Erhitzung zu erzielen, kann man vorteilhafterweise den Kohlenhydrat-, Protein- und/oder Caseinat-Träger mit möglichst wenig Wasser zu einer viskosen Flüssigkeit anmachen, die mit den zu trocknende(n) Würzpflanzenteilen wird und diese gleichmäßig überzieht. Dadurch läßt sich nicht nur ein besonders abriebfestes und — vermutlich aufgrund eines "Verkapselungseffekts" — lagerungsbeständiges Trockenprodukt erzielen, sondern auch eine besonders exakte, gleichmäßige und genau gesteuerte Temperaturführung bei der Wärmebehandlung, da die im Gemisch vorhandene trägerhaltige viskose Flüssigkeit für einen glatten und raschen Wärmetransport sorgt.

Als Träger für diese Ausführungsform der Erfindung haben sich gegebenenfalls hydrierte Maltopolysaccharide, wie Maltodextrin und Quellstärke, sowie insbesondere sogenannte lösliche, verflüssigte bzw. dünnkochende Stärken als besonders zweckmäßig erwiesen.

Wie ferner festgestellt wurde, ist es vorteilhaft, das zu trocknende Gemisch durch Zusatz von Mononatriumglutamat so abzupuffern, daß der pH des Zellsafts der Würzpflanze(n), der normalerweise

3

von Haus aus bei etwa 4 bis 5 liegt und im Verlauf der Trocknung meist noch weiter absinkt, auf 4,5 bis 7,5, vorzugsweise 5,0 bis 7,0 und insbesondere 5,4 bis 6,7 angehoben und während der Trocknung in diesem Bereich gehalten wird. Dadurch wird sowohl bezüglich des Aromas als insbesondere auch hinsichtlich der Farbe eine noch bessere Stabilisierung erzielt.

Es sei darauf hingewiesen, daß einige der erfindungsgemäß einzusetzenden Ausgangsmaterialien gleichzeitig mehrere Funktionen haben können. So sind die meisten der genannten Puffer gleichzeitig ein Trägermaterial.

Beispielsweise haben sich für die Elektrolyt-Träger-Ausführungsform folgende Ansatzmischungen bestens bewährt (Gewichtsteile):

| Frischkraut | Salz | Zucker | MSG |
|---|---|---|---|
| 60 | 30 | 5 | 5 |
| 50 | 15 | 30 | 5 |

Zur Trocknung selbst ist zu sagen, daß für die Zwecke der Erfindung zwar grundsätzlich alle üblichen Trocknungsverfahren angewandt werden können, die Vakuumtrocknung sich bislang aber doch am besten bewährt hat.

Dabei empfiehlt es sich, eine Schichthöhe des zu trocknenden Gutes von etwa 20 bis 30 mm einzuhalten und es bei einer Trockentemperatur von höchstens 60°C bis zu einem Restwassergehalt von 2 bis 3% zu trocknen, wobei es von Vorteil ist, während des letzten Drittels der Trockenzeit keine weitere Energie zuzuführen, so daß sich das Gut allmählich bis auf etwa 40°C abkühlt.

Bei der Vakuumtrocknung erhält man meist feste Blöcke, die jedoch ohne weiteres zerkleinert werden können.

Die Würzpflanzentrockenprodukte zeichnen sich sämtlich durch hervorragende Aroma- und Farbqualität aus und waren diesbezüglich kaum von dem jeweiligen Frischprodukten zu unterscheiden.

Beispiel

100 kg handelsübliches tiefgefrorenes Basilikum wurden 1 Tag bei — 10°C getempert. in einem Kutter wurden 32 kg Kochsalz, 9 kg Mononatriumglutamat und 9 kg Saccharose 30 Sekunden vorgemischt, worauf 50 kg Basilikum zugegeben und 30 Sekunden eingemischt, die restlichen 50 kg Basilikum zugesetzt und der Ansatz weitere 30 bis 40 Sekunden gemischt (während des Mischens taute das Basilikum) wurde(n).

Das so erhaltene Gemisch werde dann in Teilmengen von jeweils 5 kg in Form einer 3 cm dicken Schicht auf Kunststoffschalen verteilt und hierauf 15 bis 17 Stunden bei einer Heizplattentemperatur von 60°C vakuumgetrocknet, wobei der Druck in der ersten Phase der Trocknung bei etwa 26,6 mbar lag und in der Endphase auf 9,3 bis 13,3 mbar gesenkt wurde.

Das Trocknungsprodukt lag in Form von Platten mit einem Feuchtigkeitsgehalt von 2 bis 3 Gew.-% vor. die (mittels einer "Frewitt"-Passiermaschine) auf die gewünschte Korngröße zerkleinert wurden.

Der Trägergehalt des so erhaltenen erfindungsgemäßen Würzpflanzentrockenprodukts betrug 82 bis 83 Gew.-%, bezogen auf Trockensubstanz.

**Patentansprüche**

1. Rieselfähiges Würzpflanzentrockenprodukt aus getrockneten, zerkleinerten Würzkräutern und/oder -gemüsen (Würzpflanzen) dadurch gekennzeichnet, daß es
a) bezogen auf Gesamttrockensubstanz, 10—99 Gew.-% eines eßbaren, wasserlöslichen Trägers bestehend aus
i) Natrium- und/oder Kaliumchlorid (Elektrolyt) und
ii) gegebenenfalls hydrierten Kohlenhydrat enthält und mit Mononatriamglutamat auf pH 4,5 bis 7,5, vorzugsweise 5,0 bis 7,0 und insbesondere 5,4 bis 6,7 abgepuffert ist, wobei das Produkt
b) durch Trocknung erntefrischer und/oder erntefrisch tiefgefrorener, gegebenenfalls zerkleinerter Würzpflanzen aus der Gruppe bestehend aus Basilikum, Petersilie, Liebstöckel, Dill, Schnittlauch, Kerbel, Majoran, Thymian, Sellerie, Paprika, Fenchel und Lauch in Gegenwart des damit gleichmäßig vermischten Trägers bei 70°C im Gut nicht übersteigenden Temperaturen erhalten worden ist,
c) mit der Maßgabe, daß die Würzpflanzen vor bzw. zu Beginn der Trocknung, und zwar spätestens 12 Stunden nach der Ernte und höchstens 4 Stunden nach dem Zerkleinern, im Falle von erntefrischen, bzw. spätestens unmittelbar nach dem Auftauen, im Falle von erntefrisch tiefgefrorenen Würzpflanzen, durch
i) Versetzen mit mindestens einem Elektrolyten und/oder
$ii_2$) möglichst rasches Erhitzen auf 50 bis 150°C für 5 Sekunden bis 1 Stunde, sowie gegebenenfalls sofortiges rasches Abkühlen bis auf 70°C oder darunter stabilisiert worden sind.

2. Würzpflanzentrockenprodukt nach Anspruch 1, dadurch gekennzeichnet, daß es 25 bis 97, vorzugsweise 50 bis 94 Gew.-%, Träger enthält.

3. Würzpflanzentrockenprodukt nach Anspruch 1 oder 2, dadurch gekennzeichnet, daß der Träger

# EP 0 087 717 B2

Natrium- und/oder Kaliumchlorid in einer Menge von 25 bis 300 Gew.-%, bezogen auf Pflanzentrockensubstanz, enthält.

## Revendications

1. Produit végétal sec épicé à bon écoulement formé d'épices et/ou de légumes aromatiques (aromates) séchés et divisés, caractérisé en ce qu'il contient
a) par rapport à la substance sèche totale, 10 à 99% en poids d'un support hydrosoluble comestible constitue:
i) de chlorure de sodium et/ou de chlorure de potassium (électrolyte) et
ii) d'un glucide éventuellement hydrogéné et tamponné avec du glutamate monosodique à un pH 4,5 à 7,5, de préférence de 5,0 à 7,0 et notamment de 5,4 à 6,7, le produit ayant été obtenu
b) par séchage d'aromates fraîchement récoltés et/ou congelés juste après la récolte, le cas échéant d'aromates divisés du groupe comprenant le basilic, le persil, la livèche, l'aneth, la ciboulette et le cerfeuil, l'origan, le thym, le céleri, le paprika, le fenouil et le poireau en présence du support intimement mélangé avec eux à des temperatures ne dépassant pas 70°C dans la matière,
c) sous réserve que les aromates aient été stabilisés avant le séchage ou à son début, à savoir au plus tard 12 heures après la récolte et au maximum 4 heures après la division, dans le cas d'aromates fraîchement récoltés ou au plus tard juste après le décongélation dans le cas d'aromates congelés immédiatement après la récolte, par
i) addition d'au moins un électrolyte et/ou
ii) chauffage aussi rapide que possible à 50—150°C pendant une durée de 5 secondes à heure, ainsi que, le cas échéant, refroidissement rapide immédiat jusqu'à 70°C ou au-dessous.

2. Produit végétal sec épicé suivant la revendication 1, caractérisé en ce qu'il contient 25 à 97, de préférence 50 à 94% en poids de support.

3. Produit végétal sec épicé suivant la revendication 1 ou 2, caractérisé en ce que le support est formé de chlorure de sodium et/ou de chlorure de potassium en un quantité de 25 à 300% en poids, par rapport à la substance végétale sèche.

## Claims

1. A pourable seasoning plant dry product from dried, comminuted seasoning herbs and/or vegetables (seasoning plants), characterized in that it
a) contains, based on the total dry substance, 10 to 99 percent by weight of an edible, water-soluble carrier consisting of
i) sodium and/or potassium chloride (electrolyte) and
ii) optionally hydrogenated carbohydrate and is buffered with monosodium glutamate to a pH value of 4.5 to 7.5, preferably 5.0 to 7.0 and in particular 5.4 to 6.7, the product
b) having been obtained by drying seasoning plants, freshly harvested and/or deep frozen in freshly harvested condition, optionally comminuted, selected from the group consisting of basil, parsley, lovage, dill, chives, chervil, marjoram, thyme, celery, pepper, fennel and leek in the presence of the carrier uniformly mixed with it at a temperature not exceeding 70°C in the material,
c) under the condition that the seasoning plants have been stabilized prior to resp. at the beginning of the drying, namely 12 hours after the harvest at latest and 4 hours after the comminution at the most, in the case of freshly harvested seasoning plants resp. at the latest directly after defrosting in the case of seasoning plants deep frozen in freshly harvested condition by means of
i) mixing with at least one electrolyte and/or
ii) the fastest possible heating to 50 to 150°C for 5 seconds to 1 hour, and, if necessary, immediate rapid cooling to 70°C or less.

2. A seasoning plant dry product according to claim 1, characterized in that it contains 25 to 97, preferably 50 to 94 percent by weight of carrier.

3. A seasoning dry plant product according to claim 1 or 2, characterized in that the carrier contains sodium and/or potassium chloride in an amount of 25 to 300 percent by weight, based on the dry plant substance.

5